# EUROPÄISCHE PATENTSCHRIFT

(11) **EP 3 532 817 B1**
(45) Veröffentlichungstag und Bekanntmachung des Hinweises auf die Patenterteilung: **23.02.2022**
(21) Anmeldenummer: 17767798.6
(22) Anmeldetag: 11.09.2017
(51) Int. Cl.: G01L 19/00

(54) **VERFAHREN ZUM HERSTELLEN EINES DRUCKMITTLERSYSTEMS**
METHOD FOR PRODUCING A PRESSURE TRANSMITTER SYSTEM
PROCÉDÉ DE FABRICATION D'UN SYSTÈME TRANSMETTEUR DE PRESSION

(30) Priorität: 28.10.2016 DE 102016120678
(43) Veröffentlichungstag der Anmeldung: 04.09.2019
(73) Patentinhaber: Endress+Hauser SE+Co. KG, 79689 Maulburg (DE)
(72) Erfinder: SCHLACHTER, Marc Andreas, 79664 Wehr (DE); KROPF, Stefan, 79692 Kleines Wiesental (DE); LEUTHNER, Dietmar, 79576 Weil am Rhein (DE)
(74) Vertreter: Andres, Angelika Maria
(86) Internationale Anmeldenummer: PCT/EP2017/072774
(87) Internationale Veröffentlichungsnummer: WO 2018/077523

(56) Entgegenhaltungen:
- DE-A1-102014 005 409
- US-A1- 2005 225 035

## Beschreibung

Die Erfindung bezieht sich auf ein Verfahren zum Herstellen eines Druckmittlersystems sowie ein Druckmittlersystem.

Druckmittlersysteme zum Übertragen eines Mediendrucks umfassen für gewöhnlich zumindest einen dreiteilig ausgebildeten Druckmittler, ein Kapillarrohr und einen Schutzschlauch. Der dreiteilig ausgebildete Druckmittler umfasst einen Kapillaradapter, einen Befülladapter und einen Membranträgerkörper mit einer medienseitigen Oberfläche, und einer Trennmembran, die unter Ausbildung einer Druckkammer zwischen der Trennmembran und dem Druckmittlerkörper entlang zumindest eines Randes gasdicht mit dem Druckmittlerkörper verbunden ist, wobei sich von der Druckkammer ein Kanal durch den Druckmittler erstreckt, und die Druckkammer, und der Kanal mit einer Übertragungsflüssigkeit gefüllt sind, um einen an der Trennmembran anstehende Mediendruck über den Befülladapter, den Kapillaradapter und das Kapillarrohr zu einem Druckempfänger zu übertragen. Hierzu ist das Kapillarohr über den Kapillaradapter an den Membranträgerkörper angeschlossen, um den Mediendruck an den Druckempfänger, bspw. einen Drucktransmitter, zu übertragen.

Die Schrift DE 10 2014 005409 A1 offenbart einen Druckmittler mit einem Adapter.

Um einen derartiges Druckmittlersystem herzustellen, bedarf es einem aufwendigen und teuren Fertigungsprozess. Hierbei wird zuerst das Kapillarrohr in eine Durchbohrung des Kapillaradapters eingeführt bis es im Wesentlichen bündig mit einer Stirnfläche des Kapillaradapters abschließt. An dieser Stirnfläche wird anschließend das Kapillarrohr an den Kapillaradapter angeschweißt, bevor der Adapter mit dem Kapillarrohr an dem Befülladapter fixiert wird. Die Fixierung des Kapillaradapters mit dem Kapillarrohr an dem Befülladapter erfolgt anschließend und bedarf aufgrund des bereits angeschweißten Kapillarrohres einem manuellen und somit aufwendigem Nachführen des Kapillarrohres während des Schweißens.

Im nächsten Schritt wird ein Schutzschlauch über das Kapillarrohr gezogen und einseitig in eine Bohrung des Kapillaradapters, welche sich bis zu einer definierten Tiefe in Längsrichtung des Kapillaradapters erstreckt und in der Durchbohrung mündet, geführt. Der so in die Ausnehmung eingeführte Schutzschlauch wird anschließend an dem Kapillaradapter fixiert. Dieser Fertigungsprozess weist, wie bereits angedeutet, den Nachteil auf, dass er relativ aufwendig und somit auch teuer ist.

Ferner weisen derartig hergestellte Druckmittlersysteme eine schlechte Beständigkeit bei korrosionsfördernden Umgebungsbedingungen auf, da die Schweißnaht zwischen Kapillaradapter und Kapillarrohr nicht zugänglich für eine Nachbearbeitung ist, so dass es vermehrt zur Korrosionsbildung kommt. Diese führt wiederum dazu, dass es schlussendlich zu einem Ölaustritt an der korrodierten Stelle kommt.

Ein weiterer nachteiliger Aspekt derartig hergestellter Druckmittler ist, dass durch die Bohrung des Kapillaradapters in die der Schutzschlauch eingeführt ist, es zu einer Art Sammelfunktion für Flüssigkeiten, bspw. Regenwasser, kommt und somit wiederum zur vermehrter Korrosionsbildung im Übergangsbereich der Bohrung und der Durchbohrung. Es ist eine Aufgabe der Erfindung, ein vereinfachtes und kostengünstigeres Verfahren zur Herstellung eines Druckmittlersystems, sowie ein einfacheres und kostengünstiger herstellbares Druckmittlersystem mit erhöhter Lebenserwartung anzugeben.

Die Aufgabe wird erfindungsgemäß durch ein Verfahren zum Herstellen eines Druckmittlersystems sowie ein Druckmittlersystem gelöst.

Hinsichtlich des Verfahrens wird die Aufgabe durch ein Verfahren zum Herstellen eines Druckmittlersystems nach Anspruch 1 gelöst.

Erfindungsgemäß wird ein Herstellungsverfahren vorgeschlagen, bei dem die Abfolge der Schweißprozesse so geändert wurde, dass sich das Druckmittlersystem von innen formieren lässt. Da die Schweißungen standardmäßig in einer Schutzgasatmosphäre durchgeführt werden, können Anlauffarben und Verzunderungen im Innenbereich des Kapillarrohres verhindert werden. Darüber hinaus wird der Korrosionsschutz durch die Schutzgasabdeckung von außen verbessert. Ebenfalls wird durch die konstruktive Umgestaltung verhindert, dass sich ein Umweltmedium, wie bspw. Regenwasser, in kritischen korrosionsanfälligen Bereichen ansammelt.

Eine vorteilhafte Ausführungsform des erfindungsgemäßen Verfahrens sieht vor, dass der Schutzschlauch zumindest punktuell, insbesondere durch Anschweißen, nach dem Aufstecken auf den Kapillaradapter an diesem fixiert wird.

Eine alternative Ausführungsform des erfindungsgemäßen Verfahrens sieht vor, dass der Schutzschlauch mittels einer Pressung an dem Druckmittler fixiert wird.

Eine weitere vorteilhafte Ausführungsform des erfindungsgemäßen Verfahrens sieht vor, dass das Anschweißen des Kapillarrohres an die erste Kapillarschnittstelle mittels eines Orbital-, WIG- oder Laser-Schweißprozesses durchgeführt wird.

Eine weitere vorteilhafte Ausführungsform des erfindungsgemäßen Verfahrens sieht vor, dass beim Bereitstellen des Druckmittlers die erste Kapillarschnittstelle derartig ausgestaltet wird, dass sie einen ersten Anschlag aufweist, so dass das Kapillarrohr bis zu dem ersten Anschlag in den Befülladapterkörper einführbar ist.

Eine alternative Ausführungsform des erfindungsgemäßen Verfahrens sieht vor, dass die Anordnung des Kapillarrohrs und der ersten Kapillarschnittstelle zueinander sowie das Anschweißen auf Stoß erfolgen.

Eine weitere vorteilhafte Ausführungsform des erfindungsgemäßen Verfahrens sieht vor, dass der Schutzschlauch bis zu einer äußeren Stufe, welche beim Bereitstellen des Druckmittlers an dessen zweitem Ende vorgesehen wird, auf die Schutzschlauchfassung aufgesteckt wird.

Hinsichtlich des Druckmittlersystems wird die Aufgabe durch ein Druckmittlersystem nach Anspruch 8 gelöst.

Eine vorteilhafte Weiterbildung des erfindungsgemäßen Druckmittlersystems sieht vor, dass der Befülladapterkörper am zweiten Ende einen äußeren ersten Absatz als Anschlag für den Schutzschlauch als Teil Schutzschlauchfassung umfasst. Insbesondere kann die Weiterbildung vorsehen, dass der Schutzschlauch in die Schutzschlauchfassung gesteckt und zumindest punktuell, insbesondere durch Anschweißen oder mittels einer Pressung, an dem Befülladapterkörper fixiert ist.

Eine weitere vorteilhafte Weiterbildung des erfindungsgemäßen Druckmittlersystems sieht vor, dass der Befülladapterkörper am zweiten Ende am Übergang zum Ölpfad einen inneren zweiten Absatz als Anschlag für das Kapillarrohr als Teil der ersten Kapillarschnittstelle umfasst.

Eine weitere vorteilhafte Weiterbildung des erfindungsgemäßen Druckmittlersystems sieht vor, dass die erste Kapillarschnittstelle einen im Wesentlichen konstanten inneren Durchmesser aufweist und sich bis zu einer Stufe des zweiten Absatzes erstreckt. Insbesondere sieht die Weiterbildung vor, dass der innere Durchmesser der ersten Kapillarschnittstelle so gewählt ist, dass dieser im Wesentlichen einem äußeren Durchmesser des Kapillarrohres entspricht, sodass das Kapillarrohr von der ersten Kapillarschnittstelle eng umschlossen ist.

Eine weitere vorteilhafte Weiterbildung des erfindungsgemäßen Druckmittlersystems weist ferner einen Drucktransmitter und einen Drucktransmitteradapter auf, wobei der Drucktransmitteradapter eine zweite Kapillarschnittstelle aufweist über die das Kapillarrohr an dem Drucktransmitteradapter endseitig angeschweißt ist, wobei die zweite Kapillarschnittstelle im Wesentlichen gleich der ersten Kapillarschnittstelle ausgebildet ist. Insbesondere kann die Weiterbildung vorsehen, dass der Drucktransmitteradapter einen Befüllverschluss aufweist.

Eine alternative Weiterbildung des erfindungsgemäßen Druckmittlersystems sieht vor, dass das Kapillarrohr über die zweite Kapillarschnittstelle mittels eines Orbital-, WIG- oder Laser-Schweißprozesses an den Drucktransmitteradapter angeschweißt ist.

Die Erfindung wird anhand der nachfolgenden Zeichnungen näher erläutert. Es zeigt:
Fig. 1: eine Querschnittsansicht eines erfindungsgemäßen Druckmittlersystems, welches einen Druckmittler, ein Kapillarrohr und ein Schutzschlauch umfasst,
Fig. 2a und Fig. 2b: eine Querschnittsansicht des Befülladapterkörpers, wobei nur die beiden Randbereiche dargestellt sind,
Fig. 3: eine Querschnittsansicht des Druckmittlersystems, welches um einen Drucktransmitter und einen Drucktransmitteradapter erweitert ist, und
Fig. 4: .einen exemplarischen Verfahrensablauf des erfindungsgemäßen Verfahrens.

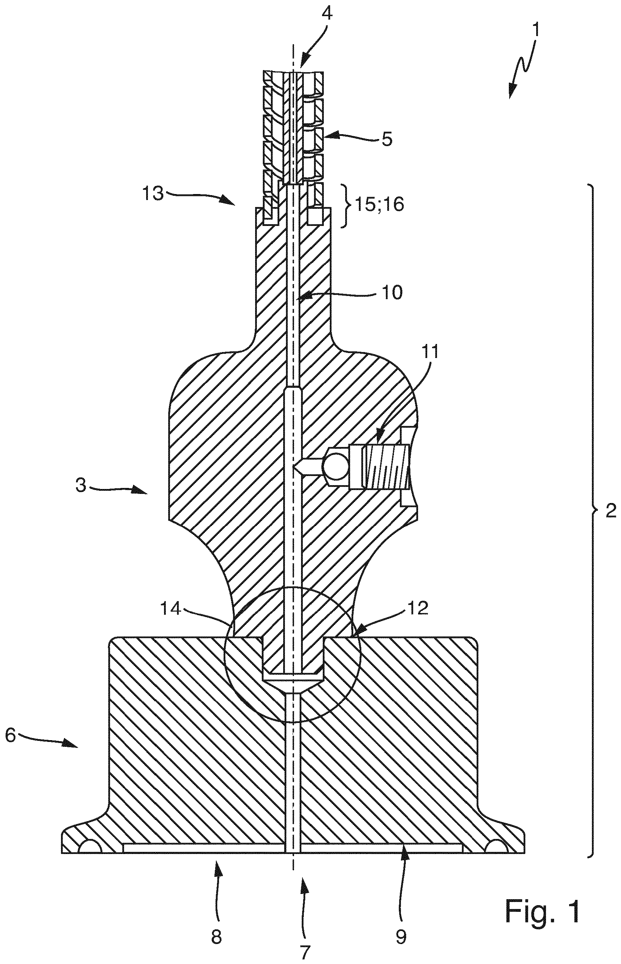

Fig. 1 zeigt eine Querschnittsansicht eines erfindungsgemäßen Druckmittlersystems 1, welches einen Druckmittler 2, ein Kapillarrohr 4 und ein Schutzschlauch 5 umfasst.

Der Druckmittler 2 besteht aus einem metallischen Membranträgerkörper 6, welcher als Drehteil, bspw. aus einem Stück Edelstahl, gefertigt und im Wesentlichen axialsymmetrisch ist, und einem Befülladapterkörper 3.

Der metallische Membranträgerkörper 6 hat eine medienseitige Oberfläche 7 und eine Trennmembran 8, die unter Ausbildung einer Druckkammer 9 zwischen der Trennmembran 8 und dem Membranträgerkörper 6 entlang zumindest eines Randes gasdicht bzw. druckbeständig mit dem Membranträgerkörper 6 verbunden ist.

Der Befülladapterkörper 3 umfasst ebenfalls einen metallischen Grundkörper 17, welcher eine erste Seite 12 und eine der ersten Seite 12 gegenüber liegende zweite Seite 13 aufweist. Auch der Befülladapterkörper 3 ist typischerweise als Drehteil hergestellt, so dass dessen Außenkontur im Wesentlichen axialsymmetrisch bzw. rotationssymmetrisch ausgebildet ist. In den Befülladapterkörper 3 ist ein innerer verbindender Ölpfad 18, eingebracht, welcher sich in Längsrichtung von der ersten Seite 12 zur zweiten Seite 13 durch den Befülladapterkörper 3 erstreckt. Der Ölpfad 18 kann bspw durch eine Bohrung und somit in Form einer inneren Kapillarleitung hergestellt sein.

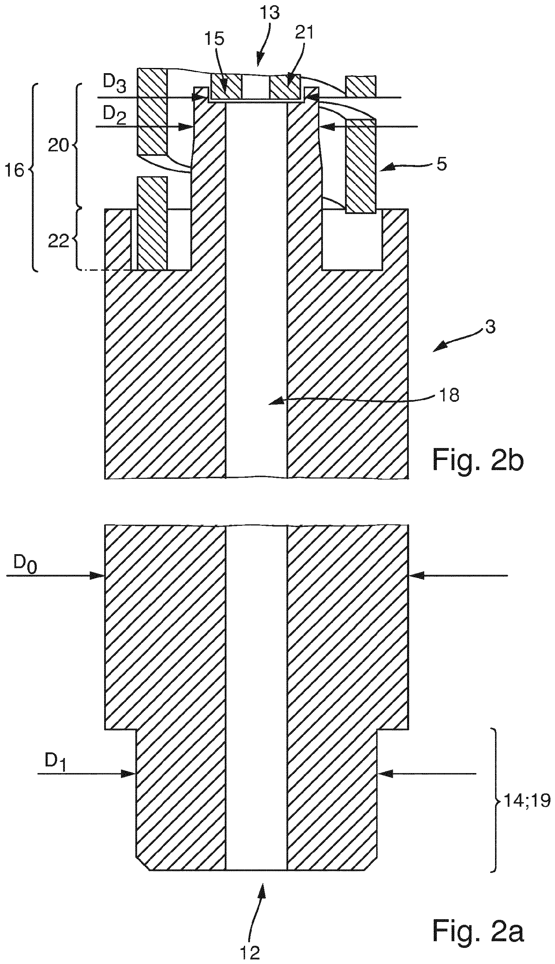

Wie in Fig. 2a dargestellt, umfasst der Befülladapterkörper 3 an der ersten Seite 12 einen Membranträgeranschluss 14, bspw. in Form eines gedrehten ersten Absatzes 19 mit einem ersten Durchmesser D₁. Mit dem Membranträgeranschluss 14 greift der Befülladapterkörper 3 in den Membranträgerkörper 6, der eine Aussparung entsprechend dem ersten Durchmesser D₁ des ersten Absatzes 19 aufweist, ein. Der erste Absatze 19 und die Aussparung sind dabei derartig aufeinander abgestimmt und ausgebildet, dass der erste Absatz 19 eng in die Aussparung einführbar bzw. einsteckbar ist. Über den Membranträgeranschluss 14 ist der Befülladapterkörper 3 an den Membranträgerkörper 6 angeschweißt.

Wie in Fig. 2b dargestellt, weist der Befülladapterkörper 3, an der der ersten Seite 12 gegenüberliegenden zweiten Seite 13, eine Kapillarschnittstelle 15 auf. Diese Kapillarschnittstelle 15 ist in Form einer Kapillarrohröffnung mit einem dritten Durchmesser D₃ ausgebildet, wobei der innere Ölpfad bzw. die Kapillarleitung 18 in die Kapillarrohröffnung mündet. Die Kapillarrohröffnung 15 ist dabei vorzugsweise so ausgebildet, dass an einem Übergang zwischen dem inneren Ölpfad bzw. der Kapillarleitung 18 und der Kapillarrohröffnung ein innerer dritter Absatz 21 in Form einer inneren Stufe ausgebildet ist. Die innere Stufe dient in diesem Fall als Anschlag für das Kapillarrohr 4 bei der Montage des Druckmittlersystems. Dementsprechend kann durch die Tiefe der Kapillarrohröffnung die Eintauchtiefe des Kapillarrohres in den Befülladapterkörper 3 bei der Montage festgelegt werden. Vorzugsweise wird die Eintauchtiefe so gewählt, dass das Kapillarrohr 4 nur teilweise in den Befülladapterkörper 3 einsteckbar ist und nicht, wie bspw. aus dem Stand der Technik bekannt, das Kapillarrohr den Kapillaradapter vollständig durchzieht. Ferner weist die Kapillarrohröffnung 15 einen im Wesentlichen konstanten Durchmesser D₃ auf. Der innere Durchmesser D₃ ist derartig gewählt, dass das Kapillarrohr 5 eng in die Kapillarrohröffnung 15 einsteckbar ist.

Wie in Fig. 2b dargestellt, umfasst die Kapillarschnittstelle 15 bzw. der Befülladapterkörper 3 eine Schutzschlauchfassung 16 auf, die derartig ausgebildet ist, dass der Schutzschlauch 5 (in Fig. 2 nur ansatzweise dargestellt) äußerlich über die Schutzschlauchfassung 16 aufsteckbar ist. Die Schutzschlauchfassung 16 weist hierzu vorzugsweise einen äußeren zweiten Absatz 20 mit einem zweiten Durchmesser D₂ auf. Der Durchmesser D₂ ist derartig gewählt, dass der Schutzschlauch 5 äußerlich eng über die Schutzschlauchfassung 16 aufsteckbar ist. Erfindungsgemäß weist die Schutzschlauchfassung 16 eine ringförmige Ausnehmung 22 auf, welche zwischen einer äußerlichen Oberfläche des Befülladapterkörpers 3 und dem inneren Ölpfad eingebracht ist und zur Aufnahme des Schutzschlauches 5 dient.

Der Befülladapterkörper 3 weist (in Fig. 2a und 2b nicht dargestellt) eine integrierte Befülleinrichtung 11 zum Befüllen des Druckmittlersystems 1 mit einer Druckübertragungsflüssigkeit 10 auf und kann ebenfalls als Drehteil gefertigt und somit im Wesentlichen auch axialsymmetrisch sein. Auch hinsichtlich der Materialwahl hat sich Edelstahl als vorteilhaft erwiesen. Der Membranträgerkörper 6 und der Befülladapterkörper 3 sind miteinander gefügt und bilden zusammen den Druckmittler 2. Der Befülladapterkörper 3 kann einen Befüllverschluss 11, über den die Druckübertragungsflüssigkeit 10 einfüllbar ist, umfassen. Der Befüllverschluss 11 kann über ein Verschlusselement, wie eine Kugel oder eine Schraube, verschlossen sein.

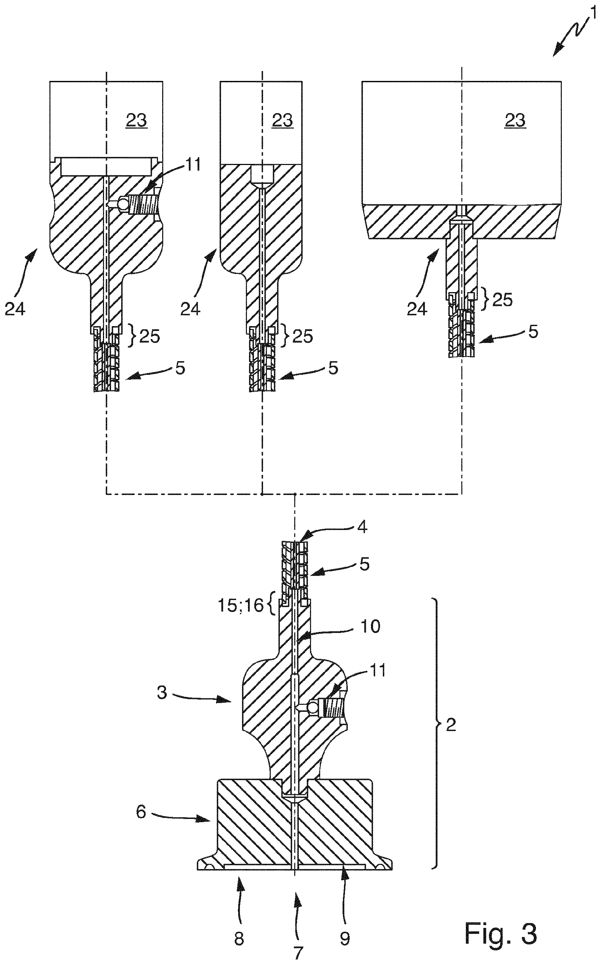

Fig. 3 zeigt eine Querschnittsansicht des Druckmittlersystems, welches um einen Drucktransmitter und einen Drucktransmitteradapter erweitert ist. Der Drucktransmitteradapter weist eine weitere Kapillarschnittstelle auf. Über diese Kapillarschnittstelle ist das Kapillarrohr endseitig an dem Drucktransmitteradapter angeschweißt, sodass im befüllten Zustand des Druckmittlersystems, ein an der Trennmembran prozessseitig anliegender Druck an den Drucktransmitter weiterleitbar ist und dieser einen Druck ermitteln kann. Der Kapillarschnittstelle des Drucktransmitteradapters ist vorzugsweise mechanisch im Wesentlichen gleich ausgestaltet, wie die Kapillarschnittstelle des sich an dem anderen Ende des Kapillarrohres befindlichen Befülladapterkörpers. Insbesondere ist das Kapillarrohr auch hier über ein Orbital-, WIG- oder Laser-Schweißprozess an dem Drucktransmitteradapter angeschweißt. Ferner kann der Drucktransmitteradapter einen Befüllverschluss zum Befüllen des Druckmittlersystems mit der Übertragungsflüssigkeit vorsehen.

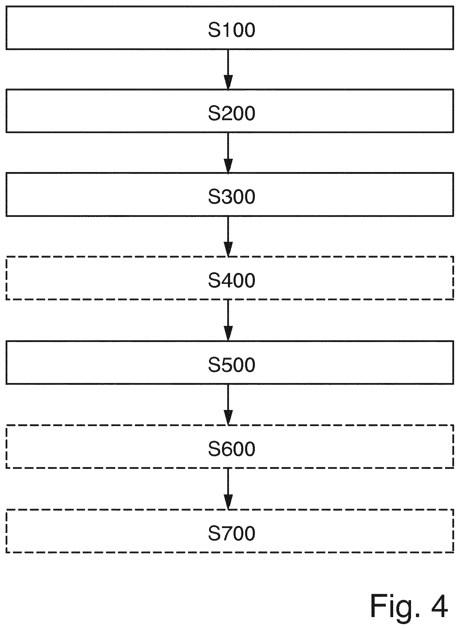

Fig. 4 zeigt einen exemplarischen Verfahrensablauf des erfindungsgemäßen Verfahrens zum Herstellen des Druckmittlersystems, welches die folgenden Verfahrensschritte vorsieht: Im ersten Verfahrensschritt S100 wird der Schutzschlauches, das Kapillarrohres und der Druckmittler bereitgestellt. Der Druckmittler wird hierbei aus zwei Teilen, dem Membranträgerkörper und dem Befüllkörperträger, hergestellt. Diese werden vorzugsweise in Form von Drehteilen aus einem metallischen Material, bspw. Edelstahl, wie zuvor beschrieben, hergestellt.

Im zweiten Verfahrensschritt S200 wird das Kapillarrohr 4 und die Kapillarschnittstelle 15 zueinander angeordnet. Hierbei kann eine Variante vorsehen, dass das Kapillarrohr 4 in die Kapillarrohröffnung als Kapillarschnittstelle 15 eingebracht wird. Wie zuvor beschrieben, wird das Kapillarrohr 4 hierbei bis zu der inneren Stufe als Anschlag in die Kapillarrohröffnung eingeführt. Bei einer alternativen Variante werden das Kapillarrohr 4 und die Kapillarschnittstelle 15 auf Stoß zueinander angeordnet.

Im dritten Verfahrensschritt S300 wird das Kapillarrohr 4 an den Kapillaradapter 3 stoffschlüssig angeschweißt. Dies wird vorzugsweise mittels eines Orbital-, WIG- oder Laser-Schweißprozesses durchgeführt. In dem Fall, dass eine Anordnung des Kapillarrohr 4 und der Kapillarschnittstelle auf Stoß erfolgt, findet auch eine Schweißung auf Stoß statt.

Aufgrund der außenliegenden Schweißnaht lässt sich diese in einem, dem vierten Verfahrensschritt folgenden, jedoch optionalen, vierten Schritt S400 nachbearbeiten. So können bspw. beim Schweißen entstandene Anlauffarben reduziert werden. Das Nachbearbeiten der Schweißnaht führt zu einer weniger korrosionsanfälligen Oberfläche im Bereich der Schweißnaht.

Im fünften Verfahrensschritt S500 wird der Schutzschlauch 5 auf die Schutzschlauchfassung 16 des Kapillaradapters 3 aufgesteckt und vorzugsweise in die ringförmige Ausnehmung eingeführt.

Im sechsten, wiederum optionalen, Verfahrensschritt S600 wird nach dem Aufstecken des Schutzschlauches auf die Schutzschlauchfassung dieser fixiert. Dies kann bspw. über eine Punktschweißung erfolgen, bei der zumindest ein Schweißpunkt, vorzugsweise mehrere Schweißpunkte gesetzt werden. Alternativ kann die Fixierung auch durch eine Pressung realisiert werden.

Im siebten, ebenfalls optionalen, Verfahrensschritt S700 wird das Kapillarrohr über die weitere Schnittstelle des Drucktransmitteradapters an den Drucktransmitteradapter, vorzugsweise über ein Orbital-, WIG- oder Laser-Schweißprozess, angeschweißt.

### Bezugszeichenliste

- 1: Druckmittlersystem
- 2: Druckmittler
- 3: Befülladapterkörper
- 4: Kapillarrohr
- 5: Schutzschlauch
- 6: Membranträgerkörper
- 7: Medienseitige Oberfläche
- 8: Trennmembran
- 9: Druckkammer
- 10: Druckübertragungsflüssigkeit
- 11: Befüllverschluss
- 12: Erste Seite des Befülladapterkörpers
- 13: Zweite Seite des Befülladapterkörpers
- 14: Membranträgeranschluss
- 15: Erste Kapillarschnittstelle des Befülladapterkörpers bzw. Druckmittlers
- 16: Schutzschlauchfassung

- 18: Innerer verbindender Ölpfad
- 19: Erster Absatz
- 20: Zweiter Absatz
- 21: Dritter Absatz
- 22: Ringförmige Ausnehmung
- 23: Drucktransmitter
- 24: Drucktransmitteradapter
- 25: Zweite Kapillarschnittstelle des Drucktransmitteradapters

## Patentansprüche

1. Verfahren zum Herstellen eines Druckmittlersystems (1) mit folgenden Schritten:
- Bereitstellen eines Schutzschlauches (5), eines Kapillarrohres (4) und eines Druckmittlers (2), wobei der Druckmittler (2) aus einem Membranträgerkörper (6) und einem Befülladapterkörper (3) besteht, wobei der Membranträgerkörper (6) an einem ersten Ende eine Trennmembran (8) umfasst, die unter Ausbildung einer Druckkammer (9) zwischen der Trennmembran (8) und dem Membranträgerkörper (6) entlang zumindest eines Randes gasdicht mit dem Membranträgerkörper (6) verbunden ist, und an einem zweiten Ende mit einem ersten Ende des Befülladapterkörpers (3) gefügt ist, wobei der Befülladapterkörper (3) an einem zweiten Ende eine erste Kapillarschnittstelle (15) zum hydraulischen Anbinden des Kapillarrohres (4) aufweist, wobei die erste Kapillarschnittstelle (15) derartig ausgebildet ist, dass das Kapillarrohr (4) bis zu einer vorbestimmten Tiefe in die erste Kapillarschnittstelle (15) einführbar ist und das Kapillarrohr (4) umschließt, wobei der Druckmittler (2) ferner einen von der Druckkammer (9) zur ersten Kapillarschnittstelle (15) führenden inneren verbindenden Ölpfad (18) aufweist, so dass die Druckkammer (9) von der ersten Kapillarschnittstelle (15) aus hydraulisch anbindbar ist, wobei das Kapillarrohr (4) in die erste Kapillarschnittstelle (15) eingeführt und an den Befülladapterkörper (3) angeschweißt ist, wobei die erste Kapillarschnittstelle (15) ferner eine Schutzschlauchfassung (16) mit einer ringförmigen Ausnehmung (22) aufweist, wobei die ringförmige Ausnehmung (22) zwischen einer äußerlichen Oberfläche des Befülladapterkörpers (3) und dem inneren Ölpfad (18) ausgebildet ist und die Schutzschlauchfassung derartig ausgebildet ist, dass der Schutzschlauch (5) äußerlich über die Schutzschlauchfassung (16) bis in die ringförmige Ausnehmung (22) aufsteckbar ist, wobei und wobei der Befülladapterkörper (3) einen Befüllverschluss (11) zum Befüllen des Druckmittlersystems mit einer Druckübertragungsflüssigkeit (10) aufweist;
- Anordnen des Kapillarrohres (4) zu der ersten Kapillarschnittstelle (15) des Druckmittlers (2), wobei das Kapillarrohr (4) endseitig bis zu der vorbestimmten Tiefe in die erste Kapillarschnittstelle (15) eingeführt wird;
- Stoffschlüssiges Anschweißen des Kapillarrohres (4) an die erste Kapillarschnittstelle (15);
- Aufstecken des Schutzschlauches (5) auf die Schutzschlauchfassung (16) der ersten Kapillarschnittstelle (15) bis in die ringförmige Ausnehmung (22).

2. Verfahren nach Anspruch 1, wobei der Schutzschlauch (5) zumindest punktuell, insbesondere durch Anschweißen, nach dem Aufstecken auf die Schutzschlauchfassung (16) an dem Druckmittler (2) fixiert wird.

3. Verfahren nach Anspruch 1, wobei der Schutzschlauch (5) mittels einer Pressung an dem Druckmittler (2) fixiert wird.

4. Verfahren nach einem oder mehreren der vorhergehenden Ansprüche, wobei das Anschweißen des Kapillarrohres (4) an die erste Kapillarschnittstelle (15) mittels eines Orbital-, WIG- oder Laser-Schweißprozesses durchgeführt wird.

5. Verfahren nach einem oder mehreren der vorhergehenden Ansprüche, wobei beim Bereitstellen des Druckmittlers (2) die erste Kapillarschnittstelle (15) derartig ausgestaltet wird, dass sie einen ersten Anschlag aufweist, so dass das Kapillarrohr (4) bis zu dem ersten Anschlag in den Befülladapterkörper (3) einführbar ist.

6. Verfahren nach einem der Ansprüche 1 bis 4, wobei die Anordnung des Kapillarrohrs (4) und der ersten Kapillarschnittstelle (15) zueinander sowie das Anschweißen auf Stoß erfolgen.

7. Verfahren nach einem oder mehreren der vorhergehenden Ansprüche, wobei der Schutzschlauch (5) bis zu einer äußeren Stufe, welche beim Bereitstellen des Druckmittlers (2) an dessen zweitem Ende vorgesehen wird, auf die Schutzschlauchfassung (16) aufgesteckt wird.

8. Druckmittlersystem aufweisend einen Druckmittler (2), ein Kapillarrohr (4) und einen Schutzschlauch (5), wobei der Druckmittler (2) aus einem Membranträgerkörper (6) und einem Befülladapterkörper (3) besteht, wobei der Membranträgerkörper (6) an einem ersten Ende eine Trennmembran (8) umfasst, die unter Ausbildung einer Druckkammer (9) zwischen der Trennmembran (8) und dem Membranträgerkörper (6) entlang zumindest eines Randes gasdicht mit dem Membranträgerkörper (6) verbunden ist, und an einem zweiten Ende mit einem ersten Ende des Befülladapterkörpers (3) gefügt ist, wobei der Befülladapterkörper (3) an einem zweiten Ende eine erste Kapillarschnittstelle (15) zum hydraulischen Anbinden des Kapillarrohres (4) aufweist, wobei die erste Kapillarschnittstelle (15) derartig ausgebildet ist, dass das Kapillarrohr (4) endseitig bis zu einer vorbestimmten Tiefe in die erste Kapillarschnittstelle (15) eingeführt ist und das Kapillarrohr (4) umschließt, wobei das Kapillarrohr (4) an den Befülladapterkörper (3) angeschweißt ist und der Druckmittler (2) ferner einen von der Druckkammer (9) zur ersten Kapillarschnittstelle (15) führenden inneren verbindenden Ölpfad (18) aufweist, so dass die Druckkammer (9) von der ersten Kapillarschnittstelle (15) aus hydraulisch anbindbar ist, wobei der Befülladapterkörper (3) einen Befüllverschluss (11) zum Befüllen des Druckmittlersystems mit einer Druckübertragungsflüssigkeit (10) aufweist, **dadurch gekennzeichnet, dass**
die erste Kapillarschnittstelle (15) ferner eine Schutzschlauchfassung (16) mit einer ringförmigen Ausnehmung (22) aufweist, wobei die ringförmige Ausnehmung (22) zwischen einer äußerlichen Oberfläche des Befülladapterkörpers (3) und dem inneren Ölpfad (18) ausgebildet ist und der Schutzschlauch äußerlich über die Schutzschlauchfassung (16) bis in die ringförmige Ausnehmung (22) eingeführt ist.

9. Druckmittlersystem nach dem vorhergehenden Anspruch, wobei der Schutzschlauch (5) in die Schutzschlauchfassung (16) gesteckt und zumindest punktuell, insbesondere durch Anschweißen oder mittels einer Pressung, an dem Befülladapterkörper (3) fixiert ist.

10. Druckmittlersystem nach einem der Ansprüche 8 oder 9, wobei der Befülladapterkörper (3) am zweiten Ende am Übergang zum Ölpfad (18) einen inneren zweiten Absatz (20) als Anschlag für das Kapillarrohr (4) als Teil der ersten Kapillarschnittstelle (15) umfasst.

11. Druckmittlersystem nach zumindest einem der Ansprüche 8 bis 10, wobei die erste Kapillarschnittstelle (15) einen im Wesentlichen konstanten inneren Durchmesser aufweist und sich bis zu einer Stufe des zweiten Absatzes (20) erstreckt.

12. Druckmittlersystem nach dem vorhergehenden Anspruch, wobei der innere Durchmesser der ersten Kapillarschnittstelle (15) so gewählt ist, dass dieser im Wesentlichen einem äußeren Durchmesser des Kapillarrohres (4) entspricht, sodass das Kapillarrohr (4) von der ersten Kapillarschnittstelle (15) umschlossen ist.

## Claims

1. Procedure for manufacturing a diaphragm seal system (1) comprising the following steps:
- Provision of a protective hose (5), a capillary tube (4) and a diaphragm seal (2), wherein the diaphragm seal (2) consists of a membrane support body (6) and a filling adapter body (3), wherein, at a first end, the membrane support body (6) comprises a separation membrane (8) which is connected in a gas-tight manner to the membrane support body (6) along at least one edge, forming a pressure chamber (9) between the separation membrane (8) and the membrane support body (6), and where, at a second end, said membrane support body is joined to a first end of the filling adapter body (3), wherein, at a second end, the filling adapter body (3) has a first capillary interface (15) for the hydraulic connection of the capillary tube (4), wherein the first capillary interface (15) is designed in such a way that the capillary tube (4) can be introduced into the first capillary interface (15) as far as a predefined depth and surrounds the capillary tube (4), wherein the diaphragm seal (2) further comprises an inner connecting oil path (18) extending from the pressure chamber (9) to the first capillary interface (15), such that the pressure chamber (9) can be hydraulically connected from the first capillary interface (15), wherein the capillary tube (4) is introduced into the first capillary interface (15) and is welded onto the filling adapter body (3), wherein the first capillary interface (15) further comprises a protective hose socket (16) with an annular recess (22), wherein the annular recess (22) is formed between an exterior surface of the filling adapter body (3) and the interior oil path (18), and wherein the protective hose socket is formed in such a way that the protective hose (5) can be fitted on the outside over the protective hose socket (16) as far as the annular recess (22), and wherein the filling adapter body (3) features a filling cap (11) to fill the diaphragm seal system with a pressure transmission liquid (10);
- Arrangement of the capillary tube (4) in relation to the first capillary interface (15) of the diaphragm seal (2), wherein the capillary tube (4) is introduced at one end into the first capillary interface (15) as far as the predefined depth;
- Substance-to-substance welding of the capillary tube (4) onto the first capillary interface (15);
- Attachment of the protective hose (5) on the protective hose socket (16) of the first capillary interface (15) as far as the inside of the annular recess (22).

2. Procedure as claimed in Claim 1, wherein the protective hose (5) is fixed at least at points, particularly by welding, on the diaphragm seal (2) after being fit on the protective hose socket (16).

3. Procedure as claimed in Claim 1, wherein the protective hose (5) is fixed on the diaphragm seal (2) by compression.

4. Procedure as claimed in one or more of the previous claims, wherein the welding of the capillary tube (4) onto the first capillary interface (15) is performed using an orbital, TIG or laser welding process.

5. Procedure as claimed in one or more of the previous claims, wherein, with the provision of the diaphragm seal (2), the first capillary interface (15) is designed in such a way that it has a first stop, such that the capillary tube (4) can be introduced into the filling adapter body (3) as far as the first stop.

6. Procedure as claimed in one of the Claims 1 to 4, wherein the arrangement of the capillary tube (4) and the first capillary interface (15) in relation to one another and the welding are performed end-to-end.

7. Procedure as claimed in one or more of the previous claims, wherein the protective hose (5) is fitted onto the protective hose socket (16) as far as an outer step which is provided at the diaphragm seal's second end when the diaphragm seal (2) is made available.

8. Diaphragm seal system comprising a diaphragm seal (2), a capillary tube (4) and a protective hose (5), wherein the diaphragm seal (2) consists of a membrane support body (6) and a filling adapter body (3), wherein the membrane support body (6) comprises a separation membrane (8) at a first end which is connected to the membrane support body (6) in a gas-tight manner along at least an edge, forming a pressure chamber (9) between the separation membrane (8) and the membrane support body (6), and wherein said membrane support body is joined at a second end with a first end of the filling adapter body (3), wherein, at a second end, the filling adapter body (3) has a first capillary interface (15) for the hydraulic connection of the capillary tube (4), wherein the first capillary interface (15) is designed in such a way that the capillary tube (4) is introduced into the first capillary interface (15) at one end as far as a predetermined depth and surrounds the capillary tube (4), wherein the capillary tube (4) is welded to the filling adapter body (3) and wherein the diaphragm seal (2) further has an internal connecting oil path (18) extending from the pressure chamber (9) to the first capillary interface (15), in such a way that the pressure chamber (9) can be hydraulically connected from the first capillary interface (15), wherein the filling adapter body (3) has a filling cap (11) to fill the diaphragm seal system with a pressure transmission liquid (10), **characterized in that**
the first capillary interface (15) further comprises a protective hose socket (16) featuring an annular recess (22), wherein the annular recess (22) is formed between an outer surface of the filling adapter body (3) and the inner oil path (18), and the protective hose is introduced on the outside into the annular recess (22) via the protective hose socket (16).

9. Diaphragm seal system as claimed in the previous claim, wherein the protective hose (5) is inserted into the protective hose socket (16) and is fixed in place on the filling adapter body (3) at least at points, particularly by welding or by compression.

10. Diaphragm seal system as claimed in one of the Claims 8 or 9, wherein, at the second end, the filling adapter body (3) comprises an interior second ledge (20) at the point of transition to the oil path (18), which serves as a stop for the capillary tube (4) as part of the first capillary interface (15).

11. Diaphragm seal system as claimed in at least one of the previous Claims 8 to 10, wherein the first capillary interface (15) has an inner diameter that is essentially constant and extends as far as a step of the second ledge (20).

12. Diaphragm seal system as claimed in the previous claim, wherein the inner diameter of the first capillary interface (15) is selected in a manner that it essentially corresponds to an outer diameter of the capillary tube (4), such that the capillary tube (4) is surrounded by the first capillary interface (15).

## Revendications

1. Procédé destiné à la fabrication d'un système de séparateur (1), lequel procédé comprend les étapes suivantes :
- Mise à disposition d'un tuyau de protection (5), d'un tube capillaire (4) et d'un séparateur (2), le séparateur (2) étant constitué d'un corps de support de membrane (6) et d'un corps d'adaptateur de remplissage (3), le corps de support de membrane (6) comprenant à une première extrémité une membrane de séparation (8) qui est reliée de manière étanche aux gaz au corps de support de membrane (6) le long d'au moins un bord en formant une chambre de pression (9) entre la membrane de séparation (8) et le corps de support de membrane (6), et lequel corps de support de membrane est assemblé à une deuxième extrémité avec une première extrémité du corps d'adaptateur de remplissage (3), le corps d'adaptateur de remplissage (3) présentant à une deuxième extrémité une première interface capillaire (15) pour le raccordement hydraulique du tube capillaire (4), la première interface capillaire (15) étant conçue de telle sorte que le tube capillaire (4) peut être introduit jusqu'à une profondeur prédéterminée dans la première interface capillaire (15) et entoure le tube capillaire (4), le séparateur (2) comprenant en outre un passage d'huile (18) de liaison interne menant de la chambre de pression (9) à la première interface capillaire (15), de sorte que la chambre de pression (9) peut être reliée hydrauliquement à partir de la première interface capillaire (15), le tube capillaire (4) étant introduit dans la première interface capillaire (15) et soudé au corps d'adaptateur de remplissage (3), la première interface capillaire (15) comprenant en outre une douille de tuyau de protection (16) avec un évidement annulaire (22), l'évidement annulaire (22) étant formé entre une surface extérieure du corps d'adaptateur de remplissage (3) et le passage d'huile (18) intérieur, et la douille de tuyau de protection étant formée de telle sorte que le tuyau de protection (5) peut être emboité extérieurement sur la douille de tuyau de protection (16) jusque dans l'évidement annulaire (22), le corps d'adaptateur de remplissage (3) comprenant un bouchon de remplissage (11) pour remplir le système de séparateur avec un liquide de transmission de pression (10) ;
- Disposition du tube capillaire (4) par rapport à la première interface capillaire (15) du séparateur (2), le tube capillaire (4) étant introduit à son extrémité jusqu'à la profondeur prédéterminée dans la première interface capillaire (15) ;
- Soudage par adhérence du tube capillaire (4) sur la première interface capillaire (15) ;
- Emboîtement du tuyau de protection (5) sur la douille de tuyau de protection (16) de la première interface capillaire (15) jusqu'à l'intérieur de l'évidement annulaire (22).

2. Procédé selon la revendication 1, pour lequel le tuyau de protection (5) est fixé au moins ponctuellement, notamment par soudage, sur le séparateur (2) après avoir été emboité sur la douille de tuyau de protection (16).

3. Procédé selon la revendication 1, pour lequel le tuyau de protection (5) est fixé sur le séparateur (2) au moyen d'un pressage.

4. Procédé selon l'une ou plusieurs des revendications précédentes, pour lequel le soudage du tube capillaire (4) à la première interface capillaire (15) est effectué au moyen d'un procédé de soudage orbital, TIG ou laser.

5. Procédé selon l'une ou plusieurs des revendications précédentes, pour lequel, lors de la mise à disposition du séparateur (2), la première interface capillaire (15) est conçue de telle sorte qu'elle présente une première butée, de sorte que le tube capillaire (4) peut être introduit dans le corps d'adaptateur de remplissage (3) jusqu'à la première butée.

6. Procédé selon l'une des revendications 1 à 4, pour lequel la disposition du tube capillaire (4) et de la première interface capillaire (15) l'un par rapport à l'autre et le soudage sont réalisés bout à bout.

7. Procédé selon l'une ou plusieurs des revendications précédentes, pour lequel le tuyau de protection (5) est emboité sur la douille de tuyau de protection (16) jusqu'à un épaulement extérieur qui est prévu lors de la mise à disposition du séparateur (2), à sa deuxième extrémité.

8. Système de séparateur comportant un séparateur (2), un tube capillaire (4) et un tuyau de protection (5), le séparateur (2) étant constitué d'un corps de support de membrane (6) et d'un corps d'adaptateur de remplissage (3), le corps de support de membrane (6) comprenant à une première extrémité une membrane de séparation (8) qui est reliée au corps de support de membrane (6) de manière étanche aux gaz le long d'au moins un bord en formant une chambre de pression (9) entre la membrane de séparation (8) et le corps de support de membrane (6), et lequel corps de support de membrane est assemblé à une deuxième extrémité avec une première extrémité du corps d'adaptateur de remplissage (3), le corps d'adaptateur de remplissage (3) présentant à une deuxième extrémité une première interface capillaire (15) pour le raccordement hydraulique du tube capillaire (4), la première interface capillaire (15) étant conçue de telle sorte que le tube capillaire (4) est introduit à son extrémité jusqu'à une profondeur prédéterminée dans la première interface capillaire (15) et entoure le tube capillaire (4), le tube capillaire (4) étant soudé au corps de l'adaptateur de remplissage (3) et le séparateur (2) présentant en outre un passage d'huile (18) de liaison interne menant de la chambre de pression (9) à la première interface capillaire (15), de sorte que la chambre de pression (9) peut être raccordée hydrauliquement à partir de la première interface capillaire (15), le corps d'adaptateur de remplissage (3) comprenant un bouchon de remplissage (11) pour remplir le système de séparateur avec un liquide de transmission de pression (10), **caractérisé en ce que**
la première interface capillaire (15) comprend en outre une douille de tuyau de protection (16) présentant un évidement annulaire (22), l'évidement annulaire (22) étant formé entre une surface extérieure du corps d'adaptateur de remplissage (3) et le passage d'huile (18) intérieur, le tuyau de protection étant introduit extérieurement à travers la douille de tuyau de protection (16) jusque dans l'évidement annulaire (22).

9. Système de séparateur selon la revendication précédente, pour lequel le tuyau de protection (5) est emboité dans la douille de tuyau de protection (16) et est fixé au moins ponctuellement, notamment par soudage ou au moyen d'un pressage, sur le corps d'adaptateur de remplissage (3).

10. Système de séparateur selon l'une des revendications 8 ou 9, pour lequel le corps d'adaptateur de remplissage (3) comprend, à la deuxième extrémité, au niveau de la transition avec le passage d'huile (18), un deuxième épaulement intérieur (20) servant de butée pour le tube capillaire (4) en tant que partie de la première interface capillaire (15).

11. Système de séparateur selon au moins l'une des revendications 8 à 10, pour lequel la première interface capillaire (15) présente un diamètre interne pour l'essentiel constant et s'étend jusqu'à un gradin du deuxième épaulement (20).

12. Système de séparateur selon la revendication précédente, pour lequel le diamètre interne de la première interface capillaire (15) est choisi de manière à correspondre pour l'essentiel à un diamètre externe du tube capillaire (4), de sorte que le tube capillaire (4) est entouré par la première interface capillaire (15).
